# EUROPEAN PATENT SPECIFICATION

(11) **EP 2 299 805 B1**
(45) Date of publication and mention of the grant of the patent: **30.08.2017**
(21) Application number: 09755091.7
(22) Date of filing: 02.06.2009
(51) Int. Cl.: G01L 19/00, A01J 5/04, G01L 9/00

(54) **PRESSURE SENSOR FOR A MILK TRANSPORT SYSTEM**
DRUCKSENSOR FÜR EIN MILCHFÖRDERUNGSSYSTEM
CAPTEUR DE PRESSION POUR SYSTÈME DE TRANSPORT DE LAIT

(30) Priority: 30.05.2008 NL 2001637
(43) Date of publication of application: 30.03.2011
(73) Proprietor: N.V. Nederlandsche Apparatenfabriek NEDAP, 7141 DC Groenlo (NL)
(72) Inventor: VAN DIJK, Jeroen Martin, 7543 ER Enschede (NL); KLOOSTRA, Sietze, NL-7241 VK Lochem (NL); SCHÄPERCLAUS, Edwin, NL-7161 HH Neede (NL)
(74) Representative: V.O.
(86) International application number: PCT/NL2009/050305
(87) International publication number: WO 2009/145634

(56) References cited:
- WO-A-2007/089185
- WO-A1-2005/108946
- WO-A2-2004/085063
- DE-A1-102004 010 789
- DE-U1- 8 711 127
- GB-A- 2 394 291
- US-A1- 2002 157 476

## Description

The invention relates to a sensor according to the preamble of claim 1.

Such a sensor is known from US 2002/0157476. Other known sensors ares arranged such that when in the first space a vacuum prevails, a first electrode and a second electrode are not electroconductively connected with each other. Further, this known sensor is so arranged that when the vacuum in the first space falls away, so that the pressure in the first space becomes, for instance, atmospheric, the first electrode and the second electrode move towards each other so that they can be electroconductively connected with each other. The moving towards each other of the first and the second electrode may, for instance, take place because the first wall deforms under the influence of an increasing pressure in the first space such that the first electrode moves towards the second electrode and will eventually be electroconductively connected therewith. When using the sensor to determine the pressure in at least one part of a milk transport system, it can thus be determined with the aid of the sensor that the pressure in the at least one part of the milk transport system is no longer a vacuum pressure but a much higher pressure such as an atmospheric pressure.

The known sensor may further be provided with an electronic measuring circuit which is connected to the first and the second electrode to determine whether or not the first and the second electrode are electroconductively connected with each other. The electronic measuring circuit may, for instance, generate an alarm when it is found that the first and the second electrode are indeed electrically connected with each other, which means that a vacuum no longer prevails in the first space.

A drawback of the known sensor is that sometimes it does not immediately detect a contact between the first and second electrode, for instance because the electrodes are polluted. As a result, the sensor wrongly indicates that a vacuum pressure (still) prevails. Another drawback is that a signal is only generated when the pressure has exceeded a predetermined value. In use, a sensor is used for determining a pressure in a milk transport system of an installation for milking animals. Such an installation, such as for instance a milking robot, is known per se. Here, a teat cup of a milking installation, in use, is attached to one of the teats of an udder of an animal to be milked. Then, with the aid of a vacuum device, a vacuum is created in the milk transport system during milking of an animal. In milking technology, vacuum is generally understood to mean a reduced pressure of 0.3-0.6 bar. The invention relates to this, but also relates to lower vacuum pressures. When for any reason the vacuum pressure starts to fall away, a signal will be generated with the aid of the sensor only when the pressure in the milk transport system has increased sufficiently. By then, the teat cup may already have become detached from a teat of an animal, have fallen on the ground, and thereby have become polluted.

The invention contemplates providing a sensor with which the course of the prevailing pressure can be measured continuously so that a vacuum falling away can be detected in time, preferably before the pressure has run up so far that the milk transport system cannot function properly anymore.

The sensor according to a first aspect of the invention is accordingly characterized by the characterizing portion of claim 1.

Carrying out a capacity measurement has the advantage that a continuous change of the position of the movable part of the first wall involves a continuous change of the value of the measured capacity. It thus holds that, within a predetermined range of the possible positions of the above-mentioned part of the first wall, a gradual change of the position of the movable part of the first wall involves a gradual change of the parameter.

In particular, the pressure prevailing in the second chamber is either known or predetermined so that the pressure prevailing in the first chamber is known on the basis of the parameter and the pressure prevailing in the second chamber. The pressure prevailing in the second chamber may, for instance, be atmospheric. In use, the course of the parameter can be monitored so that intervention can take place in time before a pressure in the at least one part of the milk transport system has run up too high. Further, the sensor according to the invention is particularly accurate and insensitive to pollution of the electrodes. In the known device, the electrodes may become polluted with the result that it is not detected when the two electrodes contact each other. In spite of the electrodes contacting each other, for instance, no adequately conductive electrical connection is obtained between the two electrodes. Such a drawback does not occur with the sensor according to the invention because the capacity measurement can also take place properly with polluted electrodes.

In particular, it holds that the first electrode is mechanically in contact with an outside of the first wall outside the first space. Because the first electrode is positioned outside the first space, which first space, in use, is in open communication with the at least one part of the milk transport system, the first electrode is prevented from possibly oxidizing under the influence of milk in the milk transport system.

More particularly, the first space may, for instance, form a channel through which, in use, milk is transported. In that case, the first electrode is prevented from coming into contact with milk, which is undesired both for the milk and for the electrode.

In particular, it holds that the sensor is provided with a third electrode which is located in the second space outside the first space and is positioned at a distance from the first electrode, while the electronic measuring circuit is connected to the second and third electrode for measuring a parameter which depends on at least the capacity formed by the first and the second electrode and the capacity formed by the first electrode and the third electrode. An advantage of this embodiment is that the electronic measuring circuit does not need to be connected to the first electrode. This is because the first and the second electrode form a first capacity while the first and the third electrode form a second capacity, while this first and second capacity are series connected with each other and while, for determining the capacity of this series circuit, a connection with the second and third electrode is sufficient.

In particular, it then holds that the sensor is designed such that the distance between the first and second electrode and a distance between the first electrode and the third electrode varies as a function of the difference in pressure between the first space and the second space so that the parameter is a measure of the pressure prevailing in the first space relative to the pressure prevailing in the second space.

More particularly, it then holds that the distance between the first and second electrode and the distance between the first and the third electrode each increase or each decrease as a result of a change of the pressure between the first space and the second space. In this manner, the sensitivity of the sensor can be augmented.

In particular, it further holds that the second space is a space which is airtightly sealed from the outside world and which is surrounded by walls of the sensor.

More particularly, it then holds that, in the second space, a pressure prevails which is atmospheric or is between 0.5 and 1 bar, and is preferably between 0.55 and 0.75 bar. An advantage of the variant in which the pressure is between 0.5 and 1 bar is that the pressure prevailing in the second space is higher or lower than the pressures measured most in the first space, viz. a vacuum pressure and an atmospheric pressure. This is of benefit to the sensitivity of the sensor.

In particular, it also holds that the second space is filled with a dielectric. In this manner, the sensitivity of the sensor can also be increased further.

Preferably, it holds that the first and second space are separated from each other by a part of the first wall and each adjoin the part of the first wall separating the first space and the second space from each other.

More particularly, it then holds that the part of the first wall is designed such that it can deform under the influence of a difference in pressure between the first space and the second space while, as a result of the deformation, a distance between the first electrode and the second electrode varies.

If the sensor is provided with a third electrode as described hereinabove, it then holds more particularly that, as a result of the deformation, the distance between the first sensor and the third sensor also varies.

According to an alternative aspect of the invention, it holds that the measuring unit is provided with a receiver for receiving electromagnetic radiation and a transmitter for generating electromagnetic radiation in the direction of the receiver, wherein the strength of the electromagnetic radiation received by the receiver and coming from the transmitter depends on the position of the at least one part of the wall, wherein the receiver is arranged to generate the said parameter on the basis of the measured strength of the received electromagnetic radiation. This embodiment also has the advantage that there are no difficulties due to polluted electrodes and that a gradual change of the pressure can be determined.

The invention further relates to a milking installation provided with a milk transport system for transporting milk of an animal that is milked, wherein the milk transport system is provided with at least one teat cup to be attached, prior to milking, to one of the teats of the udder of an animal to be milked and a vacuum device for creating a vacuum in the milk transport system during milking of an animal, wherein the milking installation is further provided with a sensor according to any one of the preceding claims, wherein the first space of the sensor is connected to the transport system such that a pressure in at least one part of the transport system is equal to a pressure in the first space.

In particular, it then holds that the first space is part of the transport system.

The invention will now be explained in more detail with reference to the drawing, in which:
Fig. 1a shows, in transparent view, a first view of a first embodiment of a sensor according to the invention of which a first electrode is visible;
Fig. 1b show, in transparent view, a second view of the sensor according to Fig. 1a where the first and second electrode are visible;
Fig. 1c shows, in transparent view, a side elevational view of the sensor according to Fig. 1a;
Fig. 2a shows, in transparent view, a first view of a second embodiment of a sensor according to the invention of which a first electrode is visible;
Fig. 2b shows, in transparent view, a second view of the sensor according to Fig. 2a where the first and second electrode are visible;
Fig. 2c shows, in transparent view, a side elevational view of the sensor according to Fig. 2a;
Fig. 3a shows a third embodiment of a sensor according to the invention when no vacuum pressure prevails;
Fig. 3b shows the sensor according to Fig. 3a when vacuum pressure prevails;
Fig. 4a shows a fourth embodiment of a sensor according to the invention when no vacuum pressure prevails;
Fig. 4b shows the sensor according to Fig. 4a when vacuum pressure prevails;
Fig. 4c shows a fifth embodiment of a sensor according to the invention when no vacuum pressure prevails;
Fig. 4d shows the sensor according to Fig. 4c when vacuum pressure prevails;
Fig. 5 shows a first embodiment of a milking installation according to the invention which is provided with a sensor according to Fig. 1a, 2a, 3a or 4a;
Fig. 6 shows a second embodiment of a milking installation according to the invention which is provided with a sensor according to Fig. 1a, 2a, 3a or 4a;
Fig. 7 shows a third embodiment of a milking installation according to the invention which is provided with a sensor according to Fig. **1a**, 2a, 3a or 4a; and
Fig. 8 shows a fourth embodiment of a milking installation according to the invention which is provided with a plurality of sensors according to Fig. 1a, 2a, 3a or 4a.

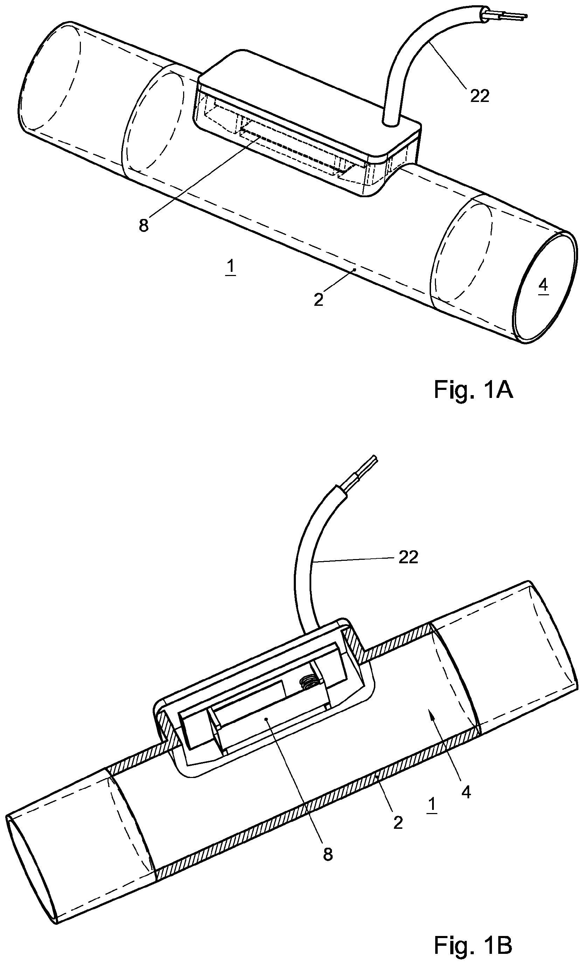

In Figs. 1a to 1c, reference numeral 1 designates a first embodiment of a sensor to determine the pressure in a milk transport system of an installation for milking animals. The sensor is provided with a first space 4 bounded by a first wall 2. In this example, it holds that the first wall forms a channel through which, in use, milk is transported. In use, the sensor is included in a pipe 6 of a milk transport system of an installation for milking animals. In this example, milk is transported through the pipe 6. So, in this example, it also holds that the first space 4 is in open communication with the milk transport system and in this example is actually part of the transport system. A result thereof is that a pressure in the first space will be at least substantially equal to a pressure in at least one part 6 of the milk transport system. In this example, the at least one part is formed by the pipe 6.

The sensor is further provided with a measuring unit 7 which is provided with a first electrode 8 which is mechanically in contact with the first wall 2. In this example, it holds that the first electrode 8 is mechanically in contact with an outside of the first wall outside the first space. The part of the wall with which the first electrode is in contact forms a movable part 18 of the wall. In particular, it then holds that the first electrode is mechanically connected to an outside 10 of the first wall 2.

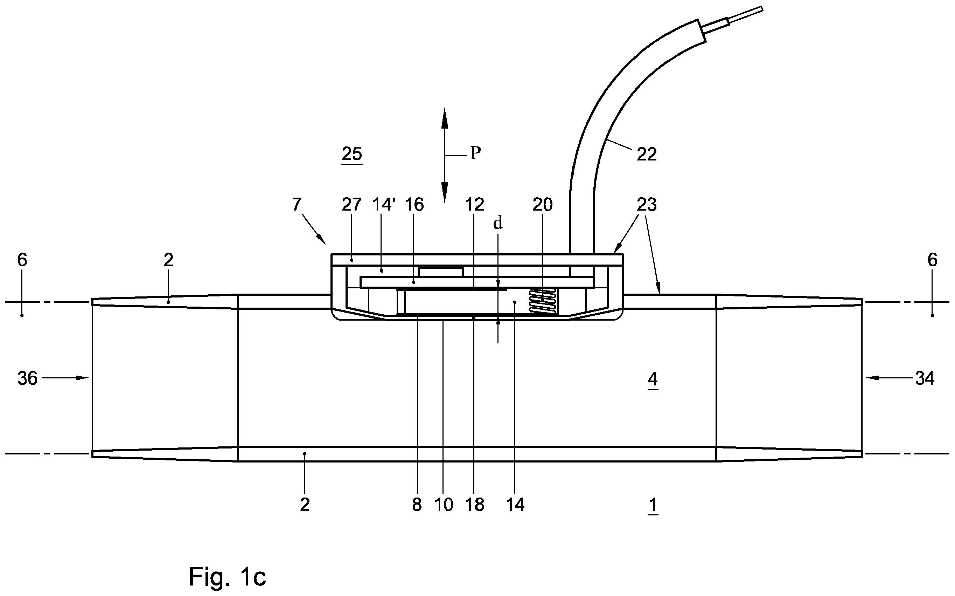

The measuring unit 7 is further provided with a second electrode 12 which is located in a second space 14 outside the first space 4 and is positioned at a distance d from the first electrode 8. The measuring unit 7 is further provided with an electronic measuring circuit 16 which is located in the second space 14 together with the second electrode 12. In this example, the second electrode 12 is fixedly connected to the measuring circuit 16 which is designed as a printed circuit board provided with electrical components. It further holds that the second electrode is fixed with respect to the whole sensor except for the movable part 18 of the first wall 2 to be discussed hereinafter. The electronic measuring circuit is electrically connected to the second electrode 12 and it further holds that the electronic measuring circuit 16 is connected to the first electrode 8 via an electrically conductive wire 20. In this example, it holds that the part 18 of the first wall has a thinner design than the rest of the first wall. In this example, in the second space 14, a known pressure prevails which is, for instance, atmospheric. All this has as a result that when in the first space 4 the pressure is approximately equal to a vacuum pressure in milking technology (approximately equal to 0.5 bar), the part 18 of the first wall assumes a position as shown in Fig. 1c. However, when the pressure in the first space increases, under the influence of this pressure, the part 18 of the first wall will move in the direction of the second electrode 12. Because of this, as a result of the mechanical contact between the first electrode and the part 18 of the first wall 2, the first electrode will also move in the direction of the second electrode. The distance d then becomes smaller. The electronic measuring circuit is arranged to at least measure a capacity formed by the first and second electrode and to determine, on the basis of this measurement, a parameter which at least depends on a position of the above-mentioned part of the first wall so that the parameter is a measure for the pressure prevailing in the first space.

The parameter in this example hence depends on the capacity formed by the first and the second electrode. This capacity depends on the distance d between the first and second electrode. Thus, a parameter is a measure of the pressure prevailing in the first space relative to the pressure prevailing in the second space. This is because when the pressure in the first space changes relative to the pressure in the second space, the part 18 of the first wall will move to a new equilibrium, whereby the distance d between the two electrodes will change as well. In this manner, a continuous course of the pressure in the first space can be determined on the basis of the parameter determined with the aid of the electronic measuring circuit. It thus holds that the capacity formed by the first and the second electrode is measured and that the parameter is determined on the basis of this measurement. This parameter may be the value of the measured capacity itself or a value which is connected therewith. Also, the sensor may be calibrated so that the magnitude of the parameter represents the absolute value of the pressure in the first chamber.

This parameter is supplied to the outside world via a signal cable 22. Of course, this may also take place in a wireless manner.

In the example, the first wall 2 is manufactured from a plastic. As a result, the part 18 having a smaller wall thickness is somewhat flexible and can deform under the influence of a pressure difference between the first and second space. In this example, the wire 20 is designed as a spiral so that, where the wire 20 is attached with the first electrode to the first electrode, the first electrode can also move back and forth relative to the second electrode in the direction of the arrow P under the influence of a varying pressure in the second chamber relative to the pressure in the first chamber.

When in the pipe 6 a vacuum pressure falls away and gradually starts to run up, as a result, the distance between the first and second electrode will also be reduced gradually, which becomes manifest in a gradual change of the parameter. This can be used for a timely signaling of the pressure starting to run up.

In this example, it holds that the second space is further filled with a dielectric in order to augment the sensitivity of the sensor. It further holds that the first and second space are separated from each other by the part 18 of the first wall 2 and each adjoin the part of the first wall separating the first space and the second space. It further holds in this example that the part of the first wall 18 is designed such that it can deform under the influence of a difference in pressure between the first space and the second space whereby, as a result of the deformation, a distance d between the first and second electrode varies. In this example, it holds that the electronic circuit is included in the second space. The second space extends on both sides of the electronic circuit. However, it is also possible in the embodiment according to Fig. 1c for the electronic circuit 16 to form a part of the wall of the second space 14. This means that the space designated by reference numeral 14' in Fig. 1c is not part of the first space 14 and may, for instance, have an atmospheric pressure. In that case, the space 14' is closed off by a part of a housing 23 of the sensor in which both the first space, the second space and the electronic circuit are included. It is also conceivable that the second space 14, 14' is part of the environment 25 of the sensor, for instance because part 27 of the housing 23 is omitted. Also, the second space 14 may be in open communication with the environment 25.

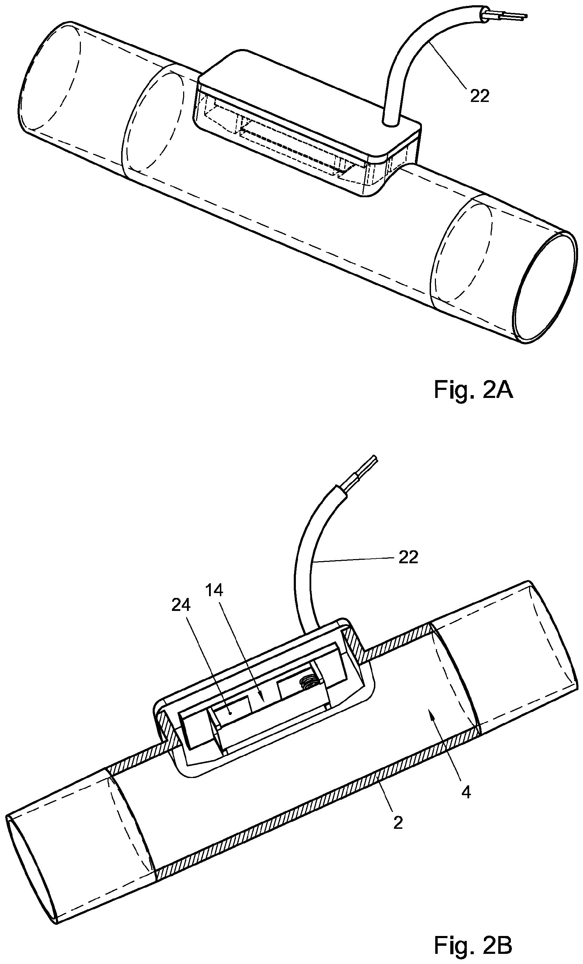

In Figs. 2a-2c, a second embodiment of a sensor according to the invention is described where parts corresponding to Fig. 1 are designated by the same reference numerals.

In this example, the second electrode 12 has a smaller design so that room is made to attach a third electrode 24 to the measuring circuit 16. So, the third electrode 24 is also included in the second space outside the first space at a distance from the first electrode 8. It further holds that the wire 20 is omitted. Instead, the electronic measuring circuit is connected to the second and the third electrode 12, 24 for measuring the respective parameter. This parameter depends on the capacity formed by the first and the second electrode on the one hand and the capacity formed by the first and the third electrode on the other hand. In fact, there are two capacities involved here, which are connected in series with each other and whose resultant capacity is measured. It thus holds that the capacity formed by the first and the second electrode and formed by the first and the third electrode is measured and that the parameter is determined on the basis of this measurement. This parameter may be the value of the measured capacity itself or a value which is connected therewith. Also, the sensor may be calibrated so that the parameter represents the pressure in the first chamber.

An advantage is that it is no longer necessary to make a wired connection between the electronic circuit and the first electrode. The electrode is designed such that the distance d between the first and the second electrode and the distance d' between the first electrode and the third electrode each vary as a function of the pressure difference between the first space 4 and the second space 14, all this completely analogous to what has been discussed hereinabove for the distance d between the first and the second electrode. It further holds in this example that the distance d between the first and the second electrode and the distance d' between the first and the third electrode each increase or each decrease as a result of a change of the pressure between the first space and the second space. In this example, the distance d and the distance d' vary in the same manner and in this example are practically always equal to each other. The result of these distance changes is that the capacities formed by the first and second electrode and the first and the third electrode, respectively, change. The capacity of the series connection formed by these capacities also changes because of this, while the magnitude of the capacity of the series connection mentioned can be determined with the aid of the measuring circuit. In this example, this magnitude is a parameter which characterizes the above-mentioned pressure difference. Thus, it is also conceivable that the distance between the first electrode and the third electrode is fixed. This may, for instance, be realized by mechanically connecting the third electrode to the first electrode with the aid of a piece of plastic, so that the third electrode moves along with the first electrode. The distance between the first and second electrode will still change then so that the above-mentioned series connection of the capacities which are formed by the first electrode and the second electrode on the one hand and the first electrode and the third electrode on the other hand, respectively, has a capacitive value which varies with a variation of capacitive value formed by the first electrode and the second electrode. The capacity of the series connection is consequently also a function of the pressure in the first space relative to the pressure in the second space. Such a sensor still has the advantage that the circuit only needs to be electronically connected to the second and third electrode and not to the first electrode.

In this example, the first electrode is located in the second space 14. However, it is also conceivable that the first electrode is located in the first space and is, for instance, mechanically connected to the part 18 of the first wall 2.

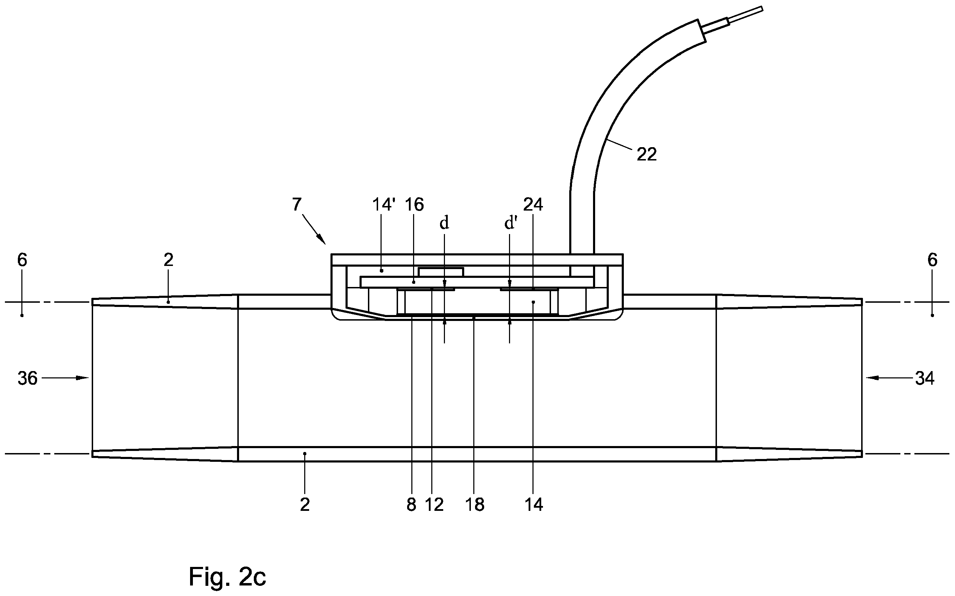

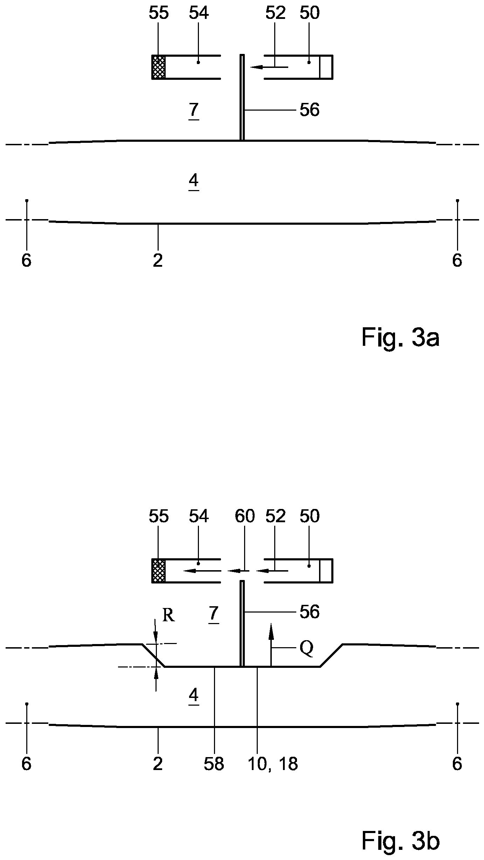

In Figs. 3a and 3b, a third embodiment of a sensor 1 according to the invention is shown. Here, parts corresponding to the Figs. 1 and 2 are designated by the same reference numerals.

The sensor 1 is provided with the measuring unit 7 which is provided with a transmitter 50 for generating electromagnetic radiation 52 and a receiver 54 for receiving electromagnetic radiation.

The transmitter is arranged such that it generates the electromagnetic radiation in the direction of the receiver. The measuring unit 7 is further provided with a radiation-weakening element 56 which is connected to the outside 10 of the movable part 18 of the wall. Depending on the position of the movable part of the wall, the radiation-weakening element will allow more or less radiation to pass through from the transmitter to the receiver. This is made clear with reference to Fig. 3a and Fig. 3b.

In Fig. 3b, a vacuum pressure prevails in the space 4. As a result, the movable part 18 of the wall will move downwards in the drawing. The result is that the electromagnetic radiation 52 sent in the direction of the receiver can be received by the receiver in an unhindered manner. In this example, the receiver is arranged to generate the above-mentioned parameter on the basis of the measured strength of the received electromagnetic radiation. The strength of the received electromagnetic radiation can be understood to mean both intensity and energy. To this end, the receiver comprises, for instance, a radiation-sensitive surface 55 with which a signal can be generated which comprises a parameter representing the above-mentioned strength of the received radiation. When the vacuum pressure has fallen away wholly or partly, the part 18 of the wall will move in the direction of the arrow Q. The result is that the radiation-weakening element 56 will allow less radiation from the transmitter to pass to the receiver. It thus holds that, depending on the position of the movable part 18 of the wall, the radiation-weakening element is situated to a greater or lesser extent in a radiation path 60 along which the radiation extends which radiates from the transmitter in the direction of the receiver. When the wall moves up further, this radiation path 60 will be interrupted increasingly farther in the direction of the arrow Q by the radiation-weakening element. A result thereof is that the strength of the electromagnetic radiation received by the receiver and coming from the transmitter depends on the position of the at least one part 18 of the wall. As said, the receiver is arranged to generate the above-mentioned parameter on the basis of the measured strength of the received electromagnetic radiation. This parameter may, for instance, represent the value of the intensity of the received radiation. This parameter then depends on the pressure prevailing in the space 4. After calibration, it may also be the case that the respective parameter directly indicates a magnitude of the pressure prevailing in the space 4.

In the range R shown in Fig. 3b, it holds that a change of the position of the wall will involve a change of the strength of the received electromagnetic radiation. Within this respective range of the possible positions of the above-mentioned part of the first wall, it holds that gradual change of the position of the movable part of the first wall will involve a gradual change of the detected strength of the electromagnetic radiation and hence a gradual change of the above-mentioned parameter.

It preferably holds that a radiation-weakening element is opaque to the radiation. However, it is also possible that a radiation-weakening element is transparent to radiation and weakens the radiation. The transparency of the radiation-weakening element to the radiation may, for instance, be variable along a surface of the radiation-weakening element. The magnitude of the transparency may, for instance, vary such that an attenuation occurs whose magnitude increases in a direction opposite to the direction of the arrow Q. The result is that when, viewed from the position according to Fig. 3b, the radiation-weakening element moves up, the strength of the radiation received by the receiver is not only reduced because the radiation-weakening element extends in a part of the radiation path, but also because that part of the radiation-weakening element on which the radiation falls on average provides an increasingly greater attenuation.

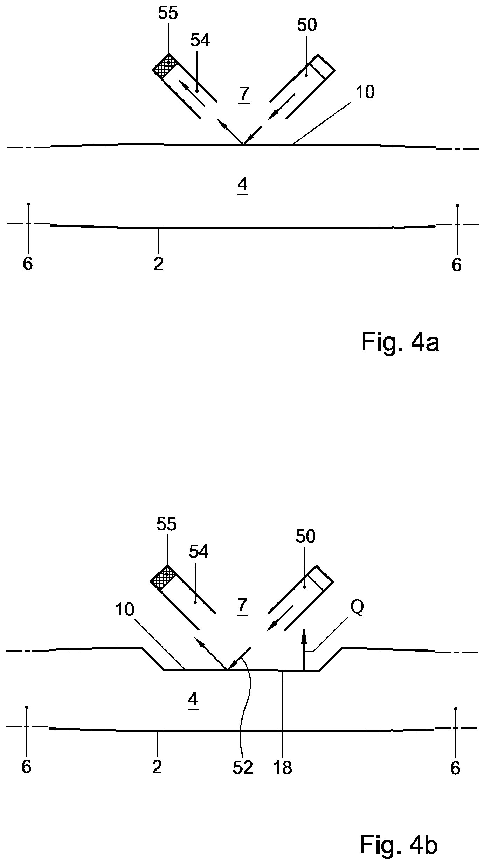

In Fig. 4a, a fourth embodiment of a sensor according to the invention is shown, where parts corresponding to the foregoing Figures are designated by the same reference numerals. In this variant, the transmitter 50 is arranged such that it transmits the radiation to the outside 10 of the movable part 18 of the first wall and the receiver 54 is arranged such that it can receive a reflection of the radiation on the outside of the wall. Here, it further holds that the amount of received radiation depends on the position of the movable part 18 of the wall. This appears, for instance, from Fig. 4b where the position of the movable part 18 of the wall is shown when a vacuum pressure prevails in the space 4. In this case, the radiation 52 transmitted by the transmitter 50 will not be received by the receiver 54 after reflection. When the part 18 of the movable wall moves upwards in the direction of the arrow Q as a result of a vacuum pressure falling away, the result will be that, after reflection, a part of the reflected radiation is received by the receiver 54. The further the part 18 moves upwards, the more radiation will be received. The receiver is again arranged to measure the strength of the received radiation and to generate a parameter representing this strength. This parameter is again a measure of the pressure prevailing in the first space.

In Fig. 4a, there is represented the situation where in the space 4 a same pressure prevails as in an environment of the sensor, i.e. that the pressure in the space 4 is atmospheric. In that case, the major part of electromagnetic radiation transmitted by the transmitter 50 will be received by the receiver 54. Of course, the outside 10 of the part 18 may then be so designed as to be suitable for reflecting the respective electromagnetic radiation. Preferably, it holds that the respective electromagnetic radiation is light. The outside 10 of the part 18 may then be designed as a light-reflecting surface.

It thus holds in the example of Figs. 3a, 3b, 4a and 4b that the measuring unit is provided with a receiver for receiving electromagnetic radiation and a transmitter for generating electromagnetic radiation in the direction of the receiver, while the sensor is arranged such that a property of the electromagnetic radiation received by the receiver and coming from the transmitter depends on the position of the at least one part of the wall, while the receiver is arranged to generate the above-mentioned parameter on the basis of the measured property of the received electromagnetic radiation. The property which is measured here and which depends on the position of the at least one part of the wall is, in these examples, the strength of the received radiation. Other properties such as a direction and/or position of a radiation path 60 (also called propagation path) of the radiation transmitted by the transmitter are also possible.

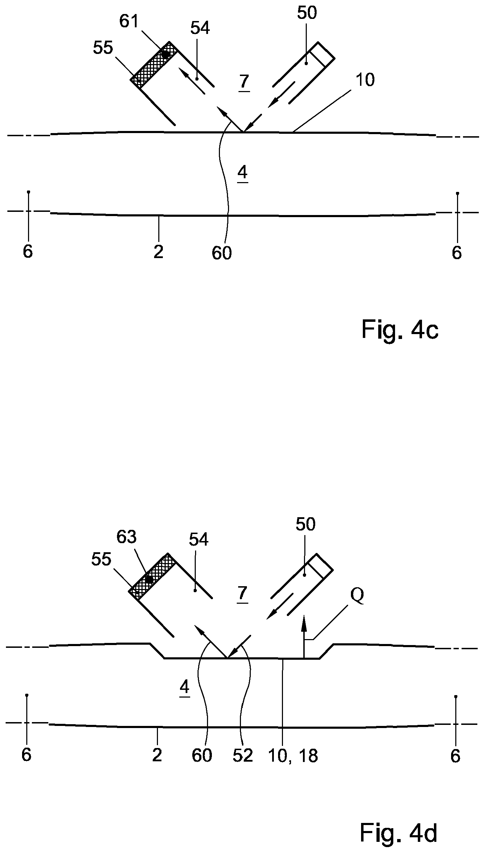

In the example of Figs. 4c and 4d, it holds that the transmitter 50 is set up in such a way as to transmit the radiation to the outside 10 of the movable part of the first wall and that the receiver 54 is set up in such a way as to be able to receive a reflection of the radiation on the outside of the wall, while the position of the propagation path 60 of the electromagnetic radiation after reflection depends on the position of the movable part of the wall. In this example, the receiver is provided with a CCD 55 which can measure at what position of the CCD the radiation after reflection is received. The transmitter transmits the radiation in the form of a beam. In Fig. 4d, the position of the movable part 18 of the wall is shown when a vacuum pressure prevails in the space 4 and, in Fig. 4c, the position of the movable part 18 of the wall is shown when an atmospheric pressure prevails in the space 4. In Fig. 4c, after reflection, the beam is received at a position 61 of the CCD and, in Fig. 4d, after reflection, the beam is received at a position 63 of the CCD. These positions are a measure of the position of the part 18 of the wall and hence a measure of the pressure in the space 4. The CCD generates a signal representing these positions and this signal relates to the above-mentioned parameter. It thus holds in this example that the position of a propagation path 60 of the electromagnetic radiation received by the receiver and coming from the transmitter depends on the position of the at least one part of the wall, while the receiver is arranged to generate the above-mentioned parameter on the basis of the measured position of the propagation path of the received electromagnetic radiation. Other variants where, for instance, instead of, or in addition to, the position, the direction of the propagation path changes depending on the position of the movable part 18 are also conceivable, for instance when the direction of the outside 10 reflecting the radiation changes depending on the pressure in the space 4. Herein, direction of the outside 10 may be understood to mean a direction of a normal to this outside. The direction of the propagation path with respect to a surface of the CCD determines, for instance, when the radiation is transmitted by means of a narrow beam which is narrower than the size of the surface of the CCD, the size of the part of the CCD that receives the beam. If the beam is perpendicularly incident on the surface of the CCD, then the size of the part of the CCD that receives the beam is minimal. If the beam is incident at an angle with the normal that differs from zero, the above-mentioned size of the part of the CCD will be larger. The larger the angle with respect to the normal, the larger the part of the CCD that receives the radiation. With the receiver, again a signal can be generated that comprises a parameter which depends on the above-mentioned size and hence depends on the pressure prevailing in the space 4.

If, conversely, the width of the beam after reflection at the CCD is larger than the size of the surface of the CCD, the strength of the received part of the radiation will depend on the direction of the incident radiation with respect to the surface of the CCD. This strength can also be measured with the CCD and be related to the position of the surface 10 and hence to the pressure prevailing in the space 4.

Also other properties of the reflected radiation may be measured to determine the pressure in the space 4. Thus, the radiation transmitted by the transmitter may, for instance, consist of white light. If in the variant according to Figs. 4c and 4d the reflecting outside then has a color varying in the length direction of the space 4, it can be determined on the basis of the color of the received reflected light, where the incident light reflects on the surface 10. The position where the light reflects on the surface 10 in turn depends on the pressure prevailing in the space 4. With the CCD, a signal can be generated which depends on the color of the received light and hence depends on the pressure prevailing in the space 4.

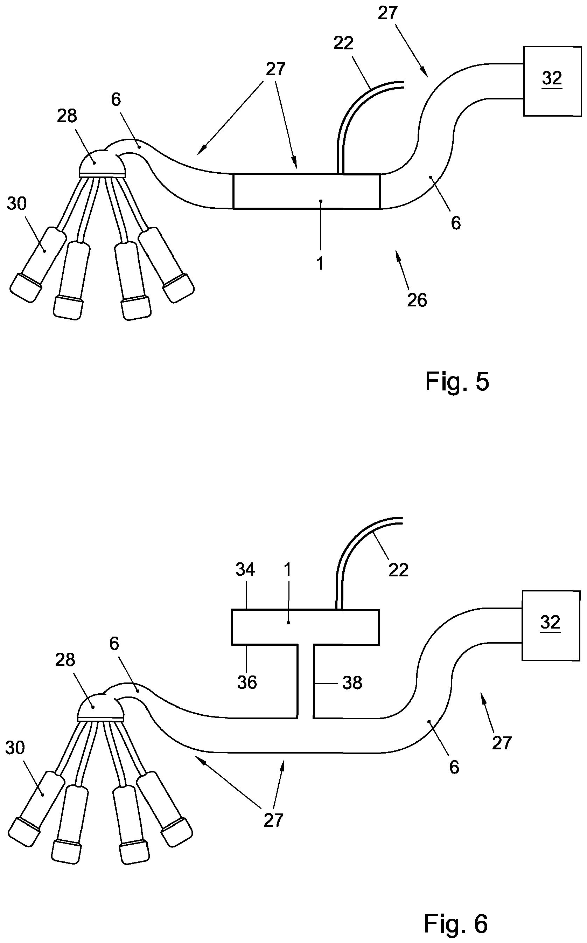

As discussed with reference to Figs. 1-4, in this example, the sensor is part of a milk transport system 27 of an installation 26 for milking animals. An example hereof is schematically shown in Fig. 5. The milking installation 26 is provided with a milk transport system 27 which, in this example, comprises a pipe 6 and the sensor 1. The milk transport system 27 is further provided with a milking claw 28 known per se which is provided with four teat cups 30. Further, the milking installation 26 is provided with a vacuum device 32 for creating a vacuum in the milk transport system 27. In use, the teat cups 30 are connected to the teats of an udder of an animal. The milk given by the animal flows via the milking claw 28 and the pipe 6 through the sensor 1 to the vacuum device 32. In this example, the pressure is thus measured in the pipe 6.

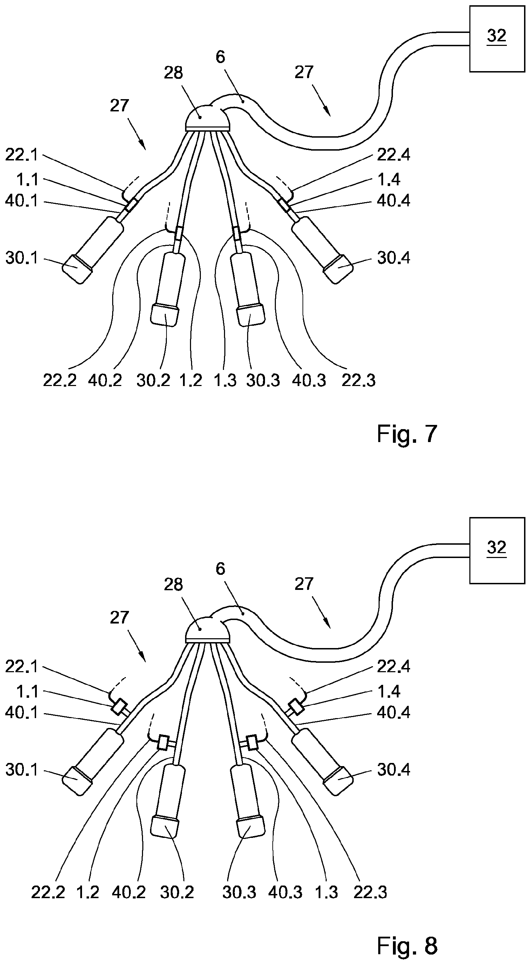

In Fig. 6, schematically, an alternative variant of a milking installation 26 according to the invention is shown. Here, parts corresponding to Fig. 5 are designated by the same reference numerals. Now, the sensor 1 is not part of the milk transport system 27 but is in open communication with the milk transport system 27. As a result, for instance, the sensor 1 according to Fig. 2c is closed off on the side 34 and on the side 36 connected to the pipe 6 via a pipe 38. In this way too, with the aid of the sensor, a pressure prevailing in the pipe 6 can be measured. It is also possible that the pressure is measured per teat cup with the aid of sensors 1.1, 1.2, 1.3, 1.4 according to the invention. Here, for instance, in a fluid connection 40.i between each teat cup (30.i) and a milking claw 28, a sensor 10.i can be included with a signal cable 22.i (i=1,2,3,4) (see Fig. 7). Here, parts corresponding to Fig. 5 are designated by the same reference numerals. Then, the sensor 1.i is part of the respective fluid connection 40.i; all this analogous to what has been discussed with reference to Fig. 5. In fact, with the aid of four sensors, the pressure is then measured in four different parts of the milk transport system, respectively, i.e. the pressure in the respective fluid connection 40.i/teat cup 30.i (i=1,2,3,4). It is also possible (see Fig. 8) that a first space of the sensor 1.i is in fluid communication with the fluid connection 40.i (i=1,2,3,4) without the sensor 1.i being part of the fluid connection 40.i, all this analogous to what has been discussed with reference to Fig. 4. Here, parts corresponding to Fig. 5 are designated by the same reference numerals.

A sensor according to the invention may also be used to measure a pressure in a milk meter. Such variants are each understood to fall within the framework of the invention according to the set of claims.

## Claims

1. A sensor (1) to determine the pressure in at least one part of a milk transport system (27) of an installation for milking animals, more particularly to determine to what extent a vacuum is present in the at least one part of the milk transport system, provided with a first space (4), bounded by at least a first wall (2), which, in use, is in open communication with the at least one part of the milk transport system or is part of the milk transport system so that, in use, a pressure in the first space (4) is at least substantially equal to a pressure in the at least one part of the milk transport system, wherein at least one part of the first wall (2) is designed to be movable under the influence of a pressure prevailing in the first space (4), wherein the sensor (1) is further provided with a measuring unit (7) for determining a parameter which depends at least on a position of said part of the first wall (2) so that the parameter is a measure of the pressure prevailing in the first space (4), wherein, within a predetermined range of the possible positions of said part of the first wall (2), a gradual change of the position of the movable part (18) of the first wall involves a gradual change of the parameter, **characterized in that** the measuring unit (7) is provided with a first electrode (8) which is mechanically in contact with the movable part (18) of the first wall and with a second electrode (12), wherein the second electrode (12) is positioned at a distance from the first electrode (8), wherein the measuring unit (7) is further provided with a second space (14) outside the first space (4) and with an electronic measuring circuit (16), for at least measuring a capacity formed by the first and second electrode (8, 12) and for determining the parameter on the basis of the measurement, wherein the sensor (1) is designed such that a distance between the first and second electrode (8,12) varies as a function of a difference in pressure between the first space (4) and the second space (14) so that the parameter is a measure of the pressure prevailing in the first space (4) relative to the pressure prevailing in the second space (14).

2. A sensor (1) to determine the pressure in at least one part of a milk transport system of an installation for milking animals, more particularly to determine to what extent a vacuum is present in the at least one part of the milk transport system, provided with a first space (4), bounded by at least a first wall (2), which, in use, is in open communication with the at least one part of the milk transport system or is part of the milk transport system so that, in use, a pressure in the first space is at least substantially equal to a pressure in the at least one part of the milk transport system, wherein at least one part of the first wall (2) is designed to be movable under the influence of a pressure prevailing in the first space, wherein the sensor is further provided with a measuring unit (7) for determining a parameter which depends at least on a position of said part of the first wall so that the parameter is a measure of the pressure prevailing in the first space, wherein, within a predetermined range of the possible positions of said part of the first wall, a gradual change of the position of the movable part of the first wall involves a gradual change of the parameter, **characterized in that** the measuring unit is provided with a receiver (54) for receiving electromagnetic radiation (51) and a transmitter (50) for generating electromagnetic radiation in the direction of the receiver, wherein the sensor is arranged such that a property of the electromagnetic radiation which is received by the receiver (54) and which comes from the transmitter (50) depends on the position of the at least one part of the wall, wherein the receiver is arranged to generate said parameter on the basis of the measured property of the received electromagnetic radiation.

3. A sensor according to claim 1, **characterized in that** the first electrode (8) is mechanically in contact with an outside of the first wall (2) outside the first space (4).

4. A sensor according to any one of the preceding claims 1 or 3, **characterized in that** the second electrode (12) is located in the second space (14).

5. A sensor according to any one of claims 1, 3, 4, **characterized in that** the sensor is designed such that the distance between the first (8) and second (12) electrode varies as a function of a change of the position of the movable part of the first wall (18).

6. A sensor according to any one of claims 3-5, **characterized in that** the first electrode is located in the second space (14).

7. A sensor according to any one of the preceding claims 1, 3-6, **characterized in that** the measuring unit is provided with a third electrode (24) which is located in the second space (14) outside the first space and is positioned at a distance from the first electrode (8), wherein the electronic circuit (16) is connected to the second and third electrode for at least measuring the capacity formed by the first and the second electrode and formed by the first electrode and the third electrode (24) and for determining the parameter on the basis of this measurement.

8. A sensor according to claim 7, **characterized in that** the sensor is designed such that the distance between the first and second electrode (8, 12) and a distance between the first electrode and the third electrode (24) varies as a function of the difference in pressure between the first space (4) and the second space (14) so that the parameter is a measure of the pressure prevailing in the first space relative to the pressure prevailing in the second space.

9. A sensor according to claim 8, **characterized in that** the distance between the first and second electrode (8, 12) and the distance between the first and the third electrode (8, 24) each increase or each decrease as a result of a change of the pressure between the first space (4) and the second space (14), more particularly that the distance between the first and the second electrode and the distance between the first and the third electrode vary equally, still more particularly that these distances are equal to each other.

10. A sensor according to claim 7, **characterized in that** the sensor is designed such that a distance between the first electrode (8) and the third electrode (24) is fixed.

11. A sensor according to any one of the preceding claims 1, 3-10, **characterized in that** the second space (14) is a space airtightly sealed to the outside world which is surrounded by walls of the sensor or that the second space is an open space which is in communication with an environment of the sensor or that the second space is the environment of the sensor.

12. A sensor according to any one of the preceding claims 1, 3-11, **characterized in that** in the second space (14) a pressure prevails which is atmospheric or is between 0.5 and 1 bar, and is preferably between 0.55 and 0.75 bar.

13. A sensor according to any one of the preceding claims 1, 3-12, **characterized in that** the second space (14) is filled with a dielectric.

14. A sensor according to any one of the preceding claims 1, 3-13, **characterized in that** the first (4) and second space (14) are separated from each other by a part (18) of the first wall (2) and each adjoin the part of the first wall (2) separating the first space (4) and the second space (14) from each other.

15. A sensor according to claim 14, **characterized in that** the part of the first wall (2) is designed such that it can deform under the influence of a difference in pressure between the first space (4) and the second space (14), wherein, as a result of the deformation, a distance between the first electrode and the second electrode varies.

16. A sensor according to claims 8 and 15, **characterized in that**, as a result of the deformation, the distance between the first electrode (8) and the third electrode (24) varies as well.

17. A sensor according to any one of the preceding claims 1, 3-16, **characterized in that** the first space, the second space and the electronic circuit are included in a housing (23) of the sensor and/or that the electronic circuit is included in the second space.

18. A sensor according to claim 2, **characterized in that** the strength of the electromagnetic radiation which is received by the receiver (54) and which comes from the transmitter (52) depends on the position of the at least one part of the wall, wherein the receiver is arranged to generate said parameter on the basis of the measured strength of the received electromagnetic radiation.

19. A sensor according to claim 18, **characterized in that** the measuring unit is further provided with a radiation-weakening element (56) which is connected to an outside of the movable part of the wall, wherein, depending on the position of the movable part of the wall, the radiation-weakening element allows more or less radiation from the transmitter to pass to the receiver.

20. A sensor according to claim 19, **characterized in that**, depending on the position of the movable part (18) of the wall, the radiation-weakening element (56) is to a greater or lesser extent located in a radiation path along which the radiation extends which radiates from the transmitter in the direction of the receiver (54).

21. A sensor according to claim 19 or 20, **characterized in that** the radiation-weakening element (56) is opaque to the radiation.

22. A sensor according to claim 19 or 20, **characterized in that** the radiation-weakening element (56) is transparent to the radiation and thereby weakens the radiation.

23. A sensor according to claim 22, **characterized in that** the transparency of the radiation-weakening element (56) to the radiation is variable along a surface of the radiation-weakening element.

24. A sensor according to claim 18, **characterized in that** the transmitter is set up in such a way as to transmit the radiation to an outside of the movable part of the first wall (2) and that the receiver (54) is set up in such a way as to be able to receive a reflection of the radiation on the outside of the wall, wherein the amount of received radiation depends on the position of the movable part (18) of the wall (2).

25. A sensor according to claim 2, **characterized in that** the direction and/or position of a propagation path of the electromagnetic radiation (52) which is received by the receiver (54) and which comes from the transmitter (50) depends on the position of the at least one part of the wall, wherein the receiver is arranged to generate said parameter on the basis of the measured direction and/or position of the propagation path.

26. A sensor according to claim 25, **characterized in that** the transmitter (50) is set up in such a way as to transmit the radiation to an outside of the movable part of the first wall (2) and that the receiver (54) is set up in such a way as to be able to receive a reflection of the radiation on the outside of the wall, wherein the direction and/or the position of the propagation path of the electromagnetic radiation (52) after reflection depends on the position of the movable part of the wall, and wherein the receiver (54) is arranged to generate said parameter on the basis of the measured direction and/or position of the propagation path (60) of the received electromagnetic radiation after reflection.

27. A sensor according to any one of claims 2,18-26, **characterized in that** the electromagnetic radiation comprises light.

28. A sensor according to any one of the preceding claims, **characterized in that** the first space (4) forms a channel (6) through which, in use, milk is transported.

29. A milking installation provided with a milk transport system (27) for transporting milk of an animal which is milked, wherein the milk transport system is provided with at least one teat cup (30) to be attached, prior to milking, to one of the teats of the udder of an animal to be milked and a vacuum device (32) for creating a vacuum in the milk transport system (27) during milking of an animal, wherein the milking installation is further provided with a sensor (1) according to any one of the preceding claims, wherein the first space (4) of the sensor is connected to the transport system such that a pressure in at least one part of the transport system is equal to a pressure in the first space.

30. A milking installation according to claim 29, **characterized in that** the first space (4) forms a channel (6) through which, in use, milk is transported wherein the first space is part of the transport system.

## Patentansprüche

1. Sensor (1) zur Bestimmung des Drucks in mindestens einem Teil eines Milchförderungssystems (27) einer Anlage zum Melken von Tieren, insbesondere um zu bestimmen, in welchem Maß ein Vakuum vorhanden ist in dem mindestens einen Teil des Milchförderungssystems, versehen mit einem ersten Raum (4), begrenzt von mindestens einer ersten Wand (2), die, bei Verwendung, in offener Kommunikation mit dem mindestens einen Teil des Milchförderungssystem ist oder Teil des Milchförderungssystems ist, sodass, bei Verwendung, ein Druck in dem ersten Raum (4) mindestens im Wesentlichen gleich einem Druck in dem mindestens einen Teil des Milchförderungssystems ist, wobei mindestens ein Teil der ersten Wand (2) konzipiert ist, um unter dem Einfluss eines in dem ersten Raum (4) vorherrschenden Drucks beweglich zu sein, wobei der Sensor (1) ferner mit einer Messeinheit (7) versehen ist, um einen Parameter zu bestimmen, der mindestens von einer Position des Teils der ersten Wand (2) abhängt, sodass der Parameter ein Maß des in dem ersten Raum (4) vorherrschenden Drucks ist,
wobei innerhalb eines vorbestimmten Bereichs der möglichen Positionen des Teils der ersten Wand (2) eine allmähliche Änderung der Position des beweglichen Teils (18) der ersten Wand eine allmähliche Änderung des Parameters beinhaltet, **dadurch gekennzeichnet, dass** die Messeinheit (7) versehen ist mit einer ersten Elektrode (8), die mechanisch mit dem bewegliche Teil (18) der ersten Wand in Kontakt ist, und mit einer zweiten Elektrode (12), wobei die zweite Elektrode (12) in einem Abstand von der ersten Elektrode (8) positioniert ist, wobei die Messeinheit (7) ferner versehen ist mit einem zweiten Raum (14) außerhalb des ersten Raums (4) und mit einem elektronischen Messschaltkreis (16), um mindestens eine von der ersten und zweiten Elektrode (8, 12) gebildete Kapazität zu messen und um den Parameter auf der Basis der Messung zu bestimmen, wobei der Sensor (1) so konzipiert ist, dass ein Abstand zwischen der ersten und zweiten Elektrode (8, 12) abhängig von einem Unterschied im Druck zwischen dem ersten Raum (4) und dem zweiten Raum (14) variiert, sodass der Parameter ein Maß des Drucks, der in dem ersten Raum (4) vorherrscht, in Bezug auf den Druck, der in dem zweiten Raum (14) vorherrscht, ist.

2. Sensor (1) zur Bestimmung des Drucks in mindestens einem Teil eines Milchförderungssystems einer Anlage zum Melken von Tieren, insbesondere um zu bestimmen, in welchem Maß ein Vakuum vorhanden ist in dem mindestens einen Teil des Milchförderungssystems, versehen mit einem ersten Raum (4), begrenzt von mindestens einer ersten Wand (2), die, bei Verwendung, in offener Kommunikation mit dem mindestens einen Teil des Milchförderungssystems ist oder Teil des Milchförderungssystems ist, sodass, bei Verwendung, ein Druck in dem ersten Raum mindestens im Wesentlichen gleich einem Druck in dem mindestens einen Teil des Milchförderungssystems ist, wobei mindestens ein Teil der ersten Wand (2) konzipiert ist, um unter dem Einfluss eines in dem ersten Raum vorherrschenden Drucks beweglich zu sein, wobei der Sensor ferner versehen ist mit einer Messeinheit (7) zum Bestimmen eines Parameters, der mindestens von einer Position des Teils der ersten Wand abhängt, sodass der Parameter ein Maß des in dem ersten Raum vorherrschenden Drucks ist, wobei, innerhalb eines vorbestimmten Bereichs der möglichen Positionen des Teils der ersten Wand, eine allmähliche Änderung der Position des beweglichen Teils der ersten Wand eine allmähliche Änderung des Parameters beinhaltet, **dadurch gekennzeichnet, dass** die Messeinheit mit einem Empfänger (54) zum Empfangen von elektromagnetischer Strahlung (51) und einem Sender (50) zum Erzeugen von elektromagnetischer Strahlung in Richtung des Empfängers versehen ist, wobei der Sensor so angeordnet ist, dass eine Eigenschaft der elektromagnetischen Strahlung, die von dem Empfänger (54) empfangen wird und die von dem Sender (50) kommt, von der Position des mindestens einen Teils der Wand abhängt, wobei der Empfänger angeordnet ist, um den Parameter auf der Basis der gemessenen Eigenschaft der empfangenen elektromagnetischen Strahlung zu erzeugen.

3. Sensor nach Anspruch 1, **dadurch gekennzeichnet, dass** die erste Elektrode (8) mechanisch in Kontakt ist mit einer Außenseite der ersten Wand (2) außerhalb des ersten Raums (4).

4. Sensor nach einem der vorhergehenden Ansprüche 1 oder 3, **dadurch gekennzeichnet, dass** die zweite Elektrode (12) in dem zweiten Raum (14) angeordnet ist.

5. Sensor nach einem der Ansprüche 1, 3, 4, **dadurch gekennzeichnet, dass** der Sensor so konzipiert ist, dass der Abstand zwischen der ersten (8) und zweiten (12) Elektrode abhängig von einer Änderung der Position des beweglichen Teils der ersten Wand (18) variiert.

6. Sensor nach einem der Ansprüche 3-5, **dadurch gekennzeichnet, dass** die erste Elektrode in dem zweiten Raum (14) angeordnet ist.

7. Sensor nach einem der vorhergehenden Ansprüche 1, 3-6, **dadurch gekennzeichnet, dass** die Messeinheit mit einer dritten Elektrode (24) versehen ist, die in dem zweiten Raum (14) außerhalb des ersten Raums angeordnet ist und in einem Abstand von der ersten Elektrode (8) positioniert ist, wobei der elektronische Schaltkreis (16) mit der zweiten und dritten Elektrode verbunden ist, um mindestens die Kapazität, die von der ersten und der zweiten Elektrode gebildet wird und von der ersten und der dritten Elektrode (24) gebildet wird, zu messen und um den Parameter auf der Basis dieser Messung zu bestimmen.

8. Sensor nach Anspruch 7, **dadurch gekennzeichnet, dass** der Sensor so konzipiert ist, dass der Abstand zwischen der ersten und zweiten Elektrode (8, 12) und ein Abstand zwischen der ersten Elektrode und der dritten Elektrode (24) abhängig von dem Unterschied im Druck zwischen dem ersten Raum (4) und dem zweiten Raum (14) variiert, sodass der Parameter ein Maß des Drucks, der in dem ersten Raum vorherrscht, in Bezug auf den Druck, der in dem zweiten Raum vorherrscht, ist.

9. Sensor nach Anspruch 8, **dadurch gekennzeichnet, dass** der Abstand zwischen der ersten und zweiten Elektrode (8, 12) und der Abstand zwischen der ersten und der dritten Elektrode (8, 24) aufgrund einer Änderung des Drucks zwischen dem ersten Raum (4) und dem zweiten Raum (14) jeweils zunimmt oder abnimmt, insbesondere dass der Abstand zwischen der ersten und der zweiten Elektrode und der Abstand zwischen der ersten und der dritten Elektrode gleich variieren, noch mehr im Besonderen, dass diese Abstände einander gleich sind.

10. Sensor nach Anspruch 7, **dadurch gekennzeichnet, dass** der Sensor so konzipiert ist, dass ein Abstand zwischen der ersten Elektrode (8) und der dritten Elektrode (24) fest ist.

11. Sensor nach einem der vorhergehenden Ansprüche 1, 3-10, **dadurch gekennzeichnet, dass** der zweite Raum (14) ein zur Außenwelt hin luftdicht versiegelter Raum ist, der von Wänden des Sensors umgeben ist, oder dass der zweite Raum ein offener Raum ist, der mit einer Umgebung des Sensors in Kommunikation ist, oder dass der zweite Raum die Umgebung des Sensors ist.

12. Sensor nach einem der vorhergehenden Ansprüche 1, 3-11, **dadurch gekennzeichnet, dass** in dem zweiten Raum (14) ein Druck vorherrscht, der atmosphärisch ist oder zwischen 0,5 und 1 Bar ist und bevorzugt zwischen 0,55 und 0,75 bar ist.

13. Sensor nach einem der vorhergehenden Ansprüche 1, 3-12, **dadurch gekennzeichnet, dass** der zweite Raum (14) mit einer Dielektrik gefüllt ist.

14. Sensor nach einem der vorhergehenden Ansprüche 1, 3-13, **dadurch gekennzeichnet, dass** der erste (4) und der zweite Raum (14) durch einen Teil (18) der ersten Wand (2) voneinander getrennt sind und jeweils an den Teil der ersten Wand (2), die den ersten Raum (4) und den zweiten Raum (14) voneinander trennt, angrenzen.

15. Sensor nach Anspruch 14, **dadurch gekennzeichnet, dass** der Teil der ersten Wand (2) so konzipiert ist, dass sie sich unter dem Einfluss eines Unterschieds im Druck zwischen dem ersten Raum (4) und dem zweiten Raum (14) verformen kann, wobei aufgrund der Verformung ein Abstand zwischen der ersten Elektrode und der zweiten Elektrode variiert.

16. Sensor nach Ansprüchen 8 und 15, **dadurch gekennzeichnet, dass** aufgrund der Verformung der Abstand zwischen der ersten Elektrode (8) und der dritten Elektrode (24) ebenfalls variiert.

17. Sensor nach einem der vorhergehenden Ansprüche 1, 3-16, **dadurch gekennzeichnet, dass** der erste Raum, zweite Raum und der elektronische Schaltkreis in einem Gehäuse (23) des Sensors aufgenommen sind und/oder dass der elektronische Schaltkreis in dem zweiten Raum aufgenommen ist.

18. Sensor nach Anspruch 2, **dadurch gekennzeichnet, dass** die Stärke der elektromagnetischen Strahlung, die von dem Empfänger (54) empfangen wird und die von dem Sender (52) kommt, von der Position des mindestens einen Teils der Wand abhängt, wobei der Empfänger angeordnet ist, um den Parameter auf der Basis der gemessenen Stärke der empfangenen elektromagnetischen Strahlung zu erzeugen.

19. Sensor nach Anspruch 18, **dadurch gekennzeichnet, dass** die Messeinheit ferner mit einem strahlungsschwächenden Element (56) versehen ist, das mit einer Außenseite des beweglichen Teils der Wand verbunden ist, wobei, abhängig von der Position des beweglichen Teils der Wand, das strahlungsschwächende Element mehr oder weniger Strahlung, die von dem Sender zu dem Empfänger geht, zulässt.

20. Sensor nach Anspruch 19, **dadurch gekennzeichnet, dass**, abhängig von der Position des beweglichen Teils (18) der Wand, das strahlungsschwächende Element (56) sich in einem größeren oder kleineren Maß in einem Strahlungsweg befindet, entlang dem die Strahlung verläuft, die von dem Sender in die Richtung des Empfängers (54) strahlt.

21. Sensor nach Anspruch 19 oder 20, **dadurch gekennzeichnet, dass** das strahlungsschwächende Element (56) opak zu der Strahlung ist.

22. Sensor nach Anspruch 19 oder 20, **dadurch gekennzeichnet, dass** das strahlungsschwächende Element (56) transparent zu der Strahlung ist und dadurch die Strahlung abschwächt.

23. Sensor nach Anspruch 22, **dadurch gekennzeichnet, dass** die Transparenz des strahlungsschwächenden Elements (56) zu der Strahlung entlang einer Oberfläche des strahlungsschwächenden Elements variabel ist.

24. Sensor nach Anspruch 18, **dadurch gekennzeichnet, dass** der Sender so eingestellt ist, dass er die Strahlung an eine Außenseite des beweglichen Teils der ersten Wand (2) sendet, und dass der Empfänger (54) so eingestellt ist, dass er in der Lage ist, eine Rückstrahlung der Strahlung an der Außenseite der Wand zu empfangen, wobei die Menge empfangener Strahlung von der Position des beweglichen Teils (18) der Wand (2) abhängt.

25. Sensor nach Anspruch 2, **dadurch gekennzeichnet, dass** die Richtung und/oder die Position des Ausbreitungswegs der elektromagnetischen Strahlung (52), die von dem Empfänger (54) empfangen wird und die von dem Sender (50) kommt, von der Position des mindestens einen Teils der Wand abhängt, wobei der Empfänger angeordnet ist, um den Parameter auf der Basis der gemessenen Richtung und/oder Position des Ausbreitungswegs zu erzeugen.

26. Sensor nach Anspruch 25, **dadurch gekennzeichnet, dass** der Sender (50) so eingestellt ist, dass er die Strahlung an eine Außenseite des beweglichen Teils der ersten Wand (2) sendet, und dass der Empfänger (54) so eingestellt ist, dass er in der Lage ist, eine Rückstrahlung der Strahlung an der Außenseite der Wand zu empfangen, wobei die Richtung und/oder die Position des Ausbreitungswegs der elektromagnetischen Strahlung (52) nach Rückstrahlung von der Position des beweglichen Teils der Wand abhängt, und wobei der Empfänger (54) angeordnet ist, um den Parameter auf der Basis der gemessenen Richtung und/oder Position des Ausbreitungswegs (60) der empfangenen elektromagnetischen Strahlung nach Rückstrahlung zu erzeugen.

27. Sensor nach einem der Ansprüche 2, 18-26, **dadurch gekennzeichnet, dass** die elektromagnetische Strahlung Licht umfasst.

28. Sensor nach einem der vorhergehenden Ansprüche, **dadurch gekennzeichnet, dass** der erste Raum (4) einen Kanal (6) bildet, durch den, bei Verwendung, Milch gefördert wird.

29. Melkanlage, versehen mit einem Milchförderungssystem (27) zum Fördern von Milch eines Tieres, das gemolken wird, wobei das Milchförderungssystem mit mindestens einem Zitzennapf (30), der vor dem Melken an einer der Zitzen des Euters eines zu melkenden Tieres angebracht wird, und einer Vakuumvorrichtung (32) zum Schaffen eines Vakuums in dem Milchförderungssystem (27) während des Melkens eines Tieres versehen ist, wobei die Melkanlage ferner mit einem Sensor (1) nach einem der vorhergehenden Ansprüche versehen ist, wobei der erste Raum (4) des Sensors so mit dem Förderungssystem verbunden ist, dass ein Druck in mindestens einem Teil des Förderungssystems gleich einem Druck in dem ersten Raum ist.

30. Melkanlage nach Anspruch 29, **dadurch gekennzeichnet, dass** der erste Raum (4) einen Kanal (6) bildet, durch den, bei Verwendung, Milch gefördert wird, wobei der erste Raum Teil des Förderungssystems ist.

## Revendications

1. Capteur (1) pour déterminer la pression dans au moins une partie d'un système de transport de lait (27) d'une installation de traite d'animaux, plus particulièrement pour déterminer dans quelle mesure une dépression est présente dans l'au moins une partie du système de transport de lait, pourvu d'un premier espace (4), délimité par au moins une première paroi (2), qui, lors de l'utilisation, est en communication ouverte avec l'au moins une partie du système de transport de lait ou fait partie du système de transport de lait de manière que, lors de l'utilisation, la pression dans le premier espace (4) soit au moins sensiblement égale à la pression dans l'au moins une partie du système de transport de lait, au moins une partie de la première paroi (2) étant conçue pour être mobile sous l'influence de la pression régnant dans le premier espace (4), le capteur (1) étant en outre pourvu d'une unité de mesure (7) pour déterminer un paramètre qui dépend au moins de la position de ladite partie de la première paroi (2) de manière que le paramètre soit une mesure de la pression régnant dans le premier espace (4), une variation progressive de la position de la partie mobile (18) de la première paroi dans une plage prédéterminée des positions possibles de ladite partie de la première paroi (2) entraînant une variation progressive du paramètre, **caractérisé en ce que** l'unité de mesure (7) est pourvue d'une première électrode (8) qui est mécaniquement en contact avec la partie mobile (18) de la première paroi et d'une deuxième électrode (12), la deuxième électrode (12) étant positionnée à distance de la première électrode (8), l'unité de mesure (7) étant en outre pourvue d'un deuxième espace (14) à l'extérieur du premier espace (4) et d'un circuit électronique de mesure (16), pour au moins mesurer une capacité formée par les première et deuxième électrodes (8, 12) et pour déterminer le paramètre sur la base de la mesure, le capteur (1) étant conçu de manière que la distance entre les première et deuxième électrodes (8, 12) varie en fonction d'une différence de pression entre le premier espace (4) et le deuxième espace (14) pour que le paramètre soit une mesure de la pression régnant dans le premier espace (4) par rapport à la pression régnant dans le deuxième espace (14).

2. Capteur (1) pour déterminer la pression dans au moins une partie d'un système de transport de lait d'une installation de traite d'animaux, plus particulièrement pour déterminer dans quelle mesure une dépression est présente dans l'au moins une partie du système de transport de lait, pourvu d'un premier espace (4), délimité par au moins une première paroi (2), qui, lors de l'utilisation, est en communication ouverte avec l'au moins une partie du système de transport de lait ou fait partie du système de transport de lait de manière que, lors de l'utilisation, la pression dans le premier espace soit au moins sensiblement égale à la pression dans l'au moins une partie du système de transport de lait, au moins une partie de la première paroi (2) étant conçue pour être mobile sous l'influence de la pression régnant dans le premier espace, le capteur étant en outre pourvu d'une unité de mesure (7) pour déterminer un paramètre qui dépend au moins de la position de ladite partie de la première paroi de manière que le paramètre soit une mesure de la pression régnant dans le premier espace, une variation progressive de la position de la partie mobile de la première paroi dans une plage prédéterminée des positions possibles de ladite partie de la première paroi entraînant une variation progressive du paramètre, **caractérisé en ce que** l'unité de mesure est pourvue d'un récepteur (54) pour recevoir un rayonnement électromagnétique (51) et d'un émetteur (50) pour générer un rayonnement électromagnétique dans la direction du récepteur, le capteur étant conçu de manière qu'une propriété du rayonnement électromagnétique qui est reçu par le récepteur (54) et qui provient de l'émetteur (50) dépende de la position de l'au moins une partie de la paroi, le récepteur étant conçu pour générer ledit paramètre sur la base de la propriété mesurée du rayonnement électromagnétique reçu.

3. Capteur selon la revendication 1, **caractérisé en ce que** la première électrode (8) est mécaniquement en contact avec l'extérieur de la première paroi (2) à l'extérieur du premier espace (4).

4. Capteur selon l'une quelconque des revendications 1 et 3 précédentes, **caractérisé en ce que** la deuxième électrode (12) est située dans le deuxième espace (14).

5. Capteur selon l'une quelconque des revendications 1, 3 et 4, **caractérisé en ce que** le capteur est conçu de manière que la distance entre les première (8) et deuxième (12) électrodes varie en fonction d'une variation de la position de la partie mobile de la première paroi (18).

6. Capteur selon l'une quelconque des revendications 3-5, **caractérisé en ce que** la première électrode est située dans le deuxième espace (14).

7. Capteur selon l'une quelconque des revendications 1 et 3-6 précédentes, **caractérisé en ce que** l'unité de mesure est pourvue d'une troisième électrode (24) qui est située dans le deuxième espace (14) à l'extérieur du premier espace et est positionnée à distance de la première électrode (8), le circuit électronique (16) étant connecté aux deuxième et troisième électrodes pour au moins mesurer la capacité formée par les première et deuxième électrodes et formée par la première électrode et la troisième électrode (24) et pour déterminer le paramètre sur la base de cette mesure.

8. Capteur selon la revendication 7, **caractérisé en ce que** le capteur est conçu de manière que la distance entre les première et deuxième électrodes (8, 12) et la distance entre la première électrode et la troisième électrode (24) varient en fonction de la différence de pression entre le premier espace (4) et le deuxième espace (14) de manière que le paramètre soit une mesure de la pression régnant dans le premier espace par rapport à la pression régnant dans le deuxième espace.

9. Capteur selon la revendication 8, **caractérisé en ce que** la distance entre les première et deuxième électrodes (8, 12) et la distance entre les première et troisième électrodes (8, 24) croissent chacune ou décroissent chacune en résultat d'une variation de la pression entre le premier espace (4) et le deuxième espace (14), plus particulièrement **en ce que** la distance entre les première et deuxième électrodes et la distance entre les première et troisième électrodes varient de manière égale, encore plus particulièrement **en ce que** ces distances sont égales l'une à l'autre.

10. Capteur selon la revendication 7, **caractérisé en ce que** le capteur est conçu de manière que la distance entre la première électrode (8) et la troisième électrode (24) soit fixe.

11. Capteur selon l'une quelconque des revendications 1 et 3-10 précédentes, **caractérisé en ce que** le deuxième espace (14) est un espace isolé hermétiquement du monde extérieur qui est entouré par des parois du capteur, ou **en ce que** le deuxième espace est un espace ouvert qui est en communication avec un environnement du capteur, ou **en ce que** le deuxième espace est l'environnement du capteur.

12. Capteur selon l'une quelconque des revendications 1 et 3-11 précédentes, **caractérisé en ce que** dans le deuxième espace (14) règne une pression qui est atmosphérique ou est comprise entre 0,5 et 1 bar, et est de préférence comprise entre 0,55 et 0,75 bar.

13. Capteur selon l'une quelconque des revendications 1 et 3-12 précédentes, **caractérisé en ce que** le deuxième espace (14) est rempli d'un diélectrique.

14. Capteur selon l'une quelconque des revendications 1 et 3-13 précédentes, **caractérisé en ce que** le premier espace (4) et le deuxième espace (14) sont séparés l'un de l'autre par une partie (18) de la première paroi (2) et sont contigus chacun à la partie de la première paroi (2) séparant le premier espace (4) et le deuxième espace (14) l'un de l'autre.

15. Capteur selon la revendication 14, **caractérisé en ce que** la partie de la première paroi (2) est conçue pour pouvoir se déformer sous l'influence d'une différence de pression entre le premier espace (4) et le deuxième espace (14), la distance entre la première électrode et la deuxième électrode variant en résultat de la déformation.

16. Capteur selon les revendications 8 et 15, **caractérisé en ce que** la distance entre la première électrode (8) et la troisième électrode (24) varie aussi en résultat de la déformation.

17. Capteur selon l'une quelconque des revendications 1 et 3-16 précédentes, **caractérisé en ce que** le premier espace, le deuxième espace et le circuit électronique sont inclus dans un boîtier (23) du capteur et/ou **en ce que** le circuit électronique est inclus dans le deuxième espace.

18. Capteur selon la revendication 2, **caractérisé en ce que** l'intensité du rayonnement électromagnétique qui est reçu par le récepteur (54) et qui provient de l'émetteur (52) dépend de la position de l'au moins une partie de la paroi, le récepteur étant conçu pour générer ledit paramètre sur la base de l'intensité mesurée du rayonnement électromagnétique reçu.

19. Capteur selon la revendication 18, **caractérisé en ce que** l'unité de mesure est en outre pourvue d'un élément d'affaiblissement du rayonnement (56) qui est relié à l'extérieur de la partie mobile de la paroi, l'élément d'affaiblissement du rayonnement (56) laissant passer vers le récepteur une plus ou moins grande partie du rayonnement de l'émetteur selon la position de la partie mobile de la paroi.

20. Capteur selon la revendication 19, **caractérisé en ce que**, selon la position de la partie mobile (18) de la paroi, l'élément d'affaiblissement du rayonnement (56) est placé dans une plus ou moins grande mesure dans un trajet de rayonnement le long duquel s'étend le rayonnement qui est émis par l'émetteur dans la direction du récepteur (54).

21. Capteur selon la revendication 19 ou 20, **caractérisé en ce que** l'élément d'affaiblissement du rayonnement (56) est opaque au rayonnement.

22. Capteur selon la revendication 19 ou 20, **caractérisé en ce que** l'élément d'affaiblissement du rayonnement (56) est transparent au rayonnement et, de ce fait, affaiblit le rayonnement.

23. Capteur selon la revendication 22, **caractérisé en ce que** la transparence au rayonnement de l'élément d'affaiblissement du rayonnement (56) est variable le long d'une surface de l'élément d'affaiblissement du rayonnement.

24. Capteur selon la revendication 18, **caractérisé en ce que** l'émetteur est installé de façon à émettre le rayonnement vers l'extérieur de la partie mobile de la première paroi (2) et **en ce que** le récepteur (54) est installé de façon à pouvoir recevoir une réflexion du rayonnement sur l'extérieur de la paroi, la quantité du rayonnement reçu dépendant de la position de la partie mobile (18) de la paroi (2).

25. Capteur selon la revendication 2, **caractérisé en ce que** la direction et/ou la position d'un trajet de propagation du rayonnement électromagnétique (52) qui est reçu par le récepteur (54) et qui provient de l'émetteur (50) dépendent de la position de l'au moins une partie de la paroi, le récepteur étant conçu pour générer ledit paramètre sur la base de la direction et/ou de la position mesurées du trajet de propagation.

26. Capteur selon la revendication 25, **caractérisé en ce que** l'émetteur (50) est installé de façon à émettre le rayonnement vers l'extérieur de la partie mobile de la première paroi (2) et **en ce que** le récepteur (54) est installé de façon à pouvoir recevoir une réflexion du rayonnement sur l'extérieur de la paroi, la direction et/ou la position du trajet de propagation du rayonnement électromagnétique (52) après réflexion dépendant de la position de la partie mobile de la paroi, et le récepteur (54) étant conçu pour générer ledit paramètre sur la base de la direction et/ou de la position mesurées du trajet de propagation (60) du rayonnement électromagnétique reçu après réflexion.

27. Capteur selon l'une quelconque des revendications 2 et 18-26, **caractérisé en ce que** le rayonnement électromagnétique comprend de la lumière.

28. Capteur selon l'une quelconque des revendications précédentes, **caractérisé en ce que** le premier espace (4) forme un canal (6) dans lequel, lors de l'utilisation, du lait est transporté.

29. Installation de traite pourvue d'un système de transport de lait (27) pour transporter du lait d'un animal qui est trait, le système de transport de lait étant pourvu d'au moins un gobelet trayeur (30) destiné à être attaché, avant la traite, à l'un des trayons du pis d'un animal à traire et d'un dispositif de dépression (32) pour créer une dépression dans le système de transport de lait (27) pendant la traite d'un animal, l'installation de traite étant en outre pourvue d'un capteur (1) selon l'une quelconque des revendications précédentes, le premier espace (4) du capteur étant mis en communication avec le système de transport de manière que la pression dans au moins une partie du système de transport soit égale à la pression dans le premier espace.

30. Installation de traite selon la revendication 29, **caractérisée en ce que** le premier espace (4) forme un canal (6) dans lequel, lors de l'utilisation, du lait est transporté, le premier espace faisant partie du système de transport.
